Europäisches Patentamt

**European Patent Office**

Office européen des brevets

(19)

(11) **EP 1 457 966 A1**

(12) **EUROPÄISCHE PATENTANMELDUNG**

(43) Veröffentlichungstag:
**15.09.2004 Patentblatt 2004/38**

(51) Int Cl.⁷: **G10L 15/10**, G10L 15/06

(21) Anmeldenummer: **04100690.9**

(22) Anmeldetag: **20.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **27.02.2003 DE 10308611**

(71) Anmelder: **SIEMENS AKTIENGESELLSCHAFT**
**80333 München (DE)**

(72) Erfinder:
- **Kunstmann, Niels**
  **85540 Haar (DE)**
- **Lukas, Klaus**
  **81739 München (DE)**
- **Schneider, Tobias**
  **81825 München (DE)**
- **Schröer, Andreas**
  **80337 München (DE)**

(54) **Verfahren zum Ermitteln der Verwechslungsgefahr von Vokabulareinträgen bei der phonembasierten Spracherkennung**

(57) Bei der phonembasierten Spracherkennung besteht das Problem, dass bei der Erstellung von Vokabularien deren Einzeleinträge paarweise möglichst unterschiedlich sein sollen, damit es später zu einer guten Erkennungsrate bei der Erkennung der zu erkennenden Begriffe kommt. Ein ohne Expertenwissen auskommendes, automatisierbares Verfahren, das ein quantitatives Maß für den Abstand zweier Vokabulareinträge angibt und in dessen Abhängigkeit weitere Maßnahmen steuerbar sind, wichtet in einer jeweiligen summarischen Zusammenfassung die gegenseitigen Positionen untereinander jeweilig betreffender Prototypen von jeweilig paarweise zu bewertenden Repräsentanten von Phonemen, Phonem-Segmenten bzw. Ganzwörtern innerhalb eines zu den Prototypen gehörenden akustischen Merkmalraums.

Phonem /a/:

Phonem /e/:

EP 1 457 966 A1

**Beschreibung**

Die Erfindung betrifft ein Verfahren zum Ermitteln der Verwechslungsgefahr von Vokabulareinträgen bei der phonembasierten Spracherkennung.

Bei der Verwendung einer phonembasierten Spracherkennung kommt für größere Wortschätze die Technologie der Hidden Markov Modelle (HMM) zum Einsatz. Dabei werden innerhalb des Hidden Markov Modells akustische Modelle für alle Phoneme einer jeweils betreffenden Sprache abgelegt. Das Vokabular eines zugehörigen Spracherkenners enthält dann für alle zu erkennenden Wörter die phonetischen Transkriptionen.

Zur phonembasierten Spracherkennung sind in der Zeitschrift: Funkschau, 13/99, Seiten 79 bis 80, "Kompakte Spracherkenner" (1), und 26/98, Seiten 72 bis 74, "Spracherkennung und Telefonie" (2) zwei Artikel erschienen, in denen unter anderem das Hidden Markov Modell im Zusammenhang mit der phonembasierten Spracherkennung besprochen ist. Im Detail bezieht sich der Artikel (1) auf die Spracherkennung in kompakten Geräten, zum Beispiel in mobilen Kommunikationsendgeräten, und bezieht sich Artikel (2) auf die Spracherkennung im Zusammenhang mit Telefonieanwendungen. In beiden Fällen ist darüber hinaus die sprecherunabhängige Spracherkennung erwähnt.

Bei der phonembasierten Spracherkennung wird zur Analyse des eintreffenden Datenstroms das Sprachsignal in kurze Zeitfenster von beispielsweise 10 oder 20 ms Länge unterteilt. Anschließend werden ausschließlich Elemente berechnet, die für die Interpretation des Gesprochenen notwendig sind. Die Spracherkennung filtert beispielsweise Informationen über die Stimmung des Sprechers, sein Geschlecht, die Sprechgeschwindigkeit, Schwankungen in Stimmlage und Hintergrundgeräusche usw. heraus. Dies dient auch dazu, die bei der Spracherkennung anfallende Datenmenge zu reduzieren. Die bei der Spracherkennung anfallende Datenmenge ist zu groß, als dass ein Rechner, und schon gar nicht ein kompakter Rechner, sie in Echtzeit abarbeiten kann.

Aus dem soweit extrahierten Sprach- bzw. Schallsignal erzeugt das zu Grunde liegende System die Fouriertransformierte. Als Fouriertransformierte ist das Sprachsignal nach Frequenzen zerlegt. Durch eine Verkettung der Fouriertransformierte mit wenigstens einer von gegebenenfalls mehreren möglichen Fensterfunktionen wird eine Steigerung im Kontrast und/oder eine Verringerung des Rauschanteils des Sprachsignals erreicht. Als Ergebnis wird eine Folge von Merkmalsvektoren (Transkriptoren) erhalten, die den zeitlichen Verlauf des Sprachsignals darstellen.

Die einzelnen Merkmalsvektoren lassen sich verschiedenen Klassen von Merkmalsvektoren zuordnen. Die Klassen von Merkmalsvektoren umfassen jeweils Gruppen von ähnlichen Merkmalsvektoren. Durch die Zuordnung der Merkmalsvektoren zu den einzelnen Klassen von Merkmalsvektoren wird das Sprachsignal identifiziert. Es liegt in einer phonetischen Umschrift vor. Der phonetischen Umschrift kann ein Bedeutungsinhalt zugewiesen werden, wenn den Klassen von Merkmalsvektoren eine Information darüber zugeordnet ist, welcher Laut durch die betreffende Klasse von Merkmalsvektoren repräsentiert ist.

Die Klassen von Merkmalsvektoren für sich alleine geben noch keine eindeutige Information darüber, welcher Laut gerade gesprochen wurde. Damit die Klassen von Merkmalsvektoren solche Laut-Informationen wiedergeben, sind Sprachaufnahmen nötig, aus denen heraus den Klassen von Merkmalsvektoren einzelne Laute bzw. Phoneme, Phonem-Cluster oder ganze Wörter zugeordnet werden.

Ein Phonem-Cluster, der auch als ein Phonem-Segment bezeichnet werden kann, fasst gleichzeitig mehrere einzelne Phoneme zu einer Einheit zusammen. Dadurch kann die insgesamt bei der Spracherkennung zu verarbeitende Datenmenge ebenfalls reduziert werden.

Phoneme sind Lautbausteine, die laut Duden noch bedeutungsdifferenzierend sind. Ein Vokal ist beispielsweise ein solches Phonem. Ein Phonem kann aber auch aus mehreren Buchstaben zusammengesetzt sein und einem einzigen Laut entsprechen. Als Beispiel für einen solchen Laut seien die Laute sch und ng genannt. Aufgrund der Unterschiede von Orthografie und Aussprache können daher Buchstaben nicht automatisch mit Phonemen gleichgesetzt werden. Im Deutschen kann beispielsweise der Buchstabe "a" lang, wie in dem Wort "Hase", oder kurz, wie in dem Wort "Hast", ausgesprochen werden. Es handelt sich zwar um den gleichen Buchstaben, aber um unterschiedliche Phoneme. So etwas gibt es im übrigen in allen Sprachen, wobei die Bedeutung eines Phonems in der einen Sprache nicht automatisch mit einem gleichen Phonem in einer anderen Sprache gleichgesetzt werden kann.

In der Spracherkennung unterscheidet man prinzipiell zwischen einer sprecherabhängigen und einer sprecherunabhängigen Spracherkennung.

Die Aussage, dass ein Spracherkennungssystem sprecherabhängig arbeitet, bedeutet, dass das System auf einen Benutzer optimiert ist. Es muss daher vor der ersten Nutzung durch einen Benutzer auf dessen Stimme trainiert werden. Die oben angesprochenen Sprachaufnahmen zur Verknüpfung von Klassen von Merkmalsvektoren mit beispielsweise Phonemen bzw. Phonem-Clustern bezieht sich in diesem Fall zumindest auf das Training durch den Benutzer.

Ein Anwendungsbeispiel für den sprecherabhängigen Modus ist die Namenswahl bei einem Telefon. Wie bei der bekannten Kurzwahl gibt der Benutzer hierzu die Rufnummer seines Gesprächspartners in ein elektronisches Telefonbuch ein. Danach spricht er zusätzlich ein- oder zweimal den Namen des Besitzers des Anschlusses auf. Damit hat der Spracherkenner des Telefons diesen Namen gelernt. Die zugehörige Rufnummer kann nun einfach durch Sprechen des Namens gewählt werden.

Die Aussage, dass ein Spracherkennungssystem sprecherunabhängig arbeitet, bedeutet dagegen, dass das System mit den Stimmen von vielen verschiedenen Personen trainiert wird bzw. vorab trainiert worden ist. Es können daher praktisch alle vakanten Benutzer des Systems zu einem späteren Zeitpunkt das System sofort und ohne ein besonderes personenbezogenes Training verwenden. Die oben angesprochenen Sprachaufnahmen zur Verknüpfung von Klassen von Merkmalsvektoren mit beispielsweise Phonemen bzw. Phonem-Clustern bezieht sich in diesem Fall auf ein Training, das zu einem vorgezogenen Zeitpunkt durchgeführt und dessen Ergebnis in einem Vorab-Stadium in das System integriert worden ist.

Für die sprecherunabhängige Spracherkennung sind Sprachproben des Wortschatzes von solchen vielen verschiedenen Personen in einer Datenbank gesammelt worden, die einen repräsentativen Querschnitt des Benutzerkreises des Spracherkennungssystems bilden. Beispielsweise ist bei der Auswahl der vielen Personen auf die unterschiedlichen Dialekte, verschiedenen Altersstufen und das Geschlecht geachtet. Mit Hilfe eines Clusterverfahrens, das beispielsweise ein iterativer Algorithmus sein kann, werden ähnliche Sprachproben in Gruppen bzw. den sogenannten Clustern zusammengefasst, wobei den Gruppen bzw. den Clustern jeweils ein Phonem, ein Phonem-Cluster oder möglicherweise auch ein ganzes Wort zugeordnet wird. Damit sind innerhalb einer jeden Gruppe bzw. eines jeden Clusters mehrere typische Repräsentanten des Phonems, des Phonem-Clusters bzw. eines ganzen Wortes in Form von entsprechenden Merkmalsvektoren vorhanden. Insgesamt können auf diese Weise wenige Repräsentanten die Sprechweisen vieler verschiedener Personen erfassen.

Der Wortschatz, der in einem sprecherunabhängigen Spracherkennungssystem integriert ist und von einem dazugehörigen Spracherkenner zu erkennen ist, kann allgemeiner oder spezieller Natur sein. Bei einer Telefonanwendung beispielsweise kann dieser Wortschatz die Ziffern Null bis Neun sowie einige Kommandowörter wie "wählen", "Telefonbuch", "Notruf", "zurückweisen" (engl.: reject), "annehmen" (engl.: accept), "umleiten" (engl.: divert) usw. umfassen. Die Telefonanwendung kann dann von einem Benutzer unmittelbar in der entsprechenden Weise benutzt werden, ohne dass er dazu vorher das System mit diesem Wortschatz trainiert.

Ein erstes Anwendungsbeispiel für den sprecherunabhängigen Modus ist ein sogenanntes Voice Activated Answering-System, das beispielsweise in ein mobiles Kommunikationsendgerät integriert ist. Dieses System erlaubt es einem Benutzer des Kommunikationsendgeräts, beispielsweise bei einem Klingeln des mobilen Kommunikationsendgeräts das Kommunikationsendgerät durch entsprechende Spracheingabe in entsprechender Weise zu steuern. Er kann beispielsweise sagen: "reject", um den Anruf abzuweisen, oder sagen: "accept", um den Anruf anzunehmen, oder sagen: "divert", um den Anruf umzuleiten.

Ein zweites Anwendungsbeispiel für den sprecherunabhängigen Modus ist eine sprachgesteuerte Telefonanlage, die bei einem Kunden vor Ort beispielsweise durch ein Betreuungspersonal mit einem zum Beispiel als Software bereits vorliegenden Adressbuch zu laden bzw. aufzurüsten ist, um sodann sofort für alle möglichen verschiedenen Nutzer verwendbar zu sein.

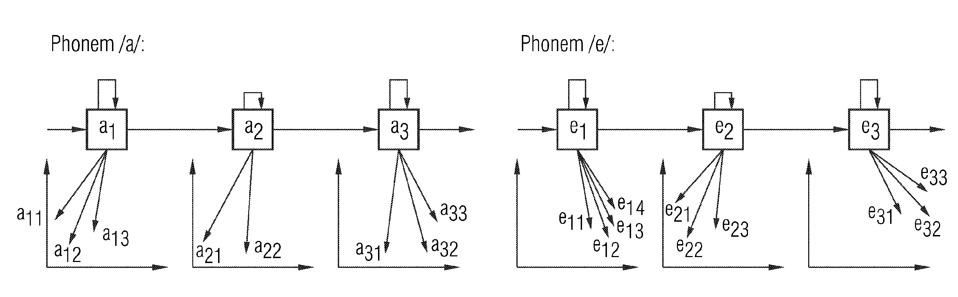

In der einzigen Figur sind Beispiele von Repräsentanten zu zwei Phonemen, beispielsweise den Phonemen /a/ und /e/, gezeigt. Die Repräsentanten untergliedern sich wegen des zeitlichen Verlaufs, in dem diese Phoneme gesprochen werden, in mehrere zeitdiskret vorliegende Merkmalsvektoren. Die Gesamtheit der Merkmalsvektoren zu einem Phonem ist als ein Hidden Markov Modell dargestellt und repräsentiert als solches das betreffende Phonem.

Für das in der einzigen Figur dargestellte Beispiel sei dabei angenommen, dass die Struktur der hinterlegten Hidden Markov Modelle für alle Phoneme gleich ist und dass ein einzelnes Hidden Markov Modell für ein Phonem zum Beispiel /x/ aus beispielsweise drei zeitdiskreten Zuständen $x_i$ mit i = 1, 2, 3 besteht.

Die gezeigten Hidden Markov Modelle sind sogenannte "linksrechts-Modelle", das heißt, ist ein Zustand nach rechts verlassen worden, so ist er nicht wieder erreichbar.

Für das in der einzigen Figur dargestellte Beispiel sei ferner angenommen, dass die Wahrscheinlichkeiten für Selbstübergänge, also Übergänge in den selben Zustand, sowie die Wahrscheinlichkeiten für Übergänge zu einem nachfolgenden Zustand für alle Phoneme gleich ist.

Jeder Zustand $x_i$ wird durch eine vorgegebene Anzahl von sogenannten Prototypen $x_{ij}$, einem einzelnen Punkt im gesamten Merkmalsraum, repräsentiert. Die Prototypen definieren damit Merkmalsvektoren im Merkmalsraum, wobei der Merkmalsraum viele Dimensionen, beispielsweise 24, haben kann. Ein Phonem wird damit zu einem zeitdiskreten Zustand quasi in Form einer Punktwolke, das heißt als ein Haufen von in dem vieldimensionalen Raum verteilt liegenden Punkten, beschrieben.

In dem in der Figur angegebenen Beispiel weist der Merkmalsraum lediglich zwei Dimensionen auf. Er kann aber auch eine beliebige andere Dimensionenzahl haben.

In dem aufgezeigten Beispiel bestehen die Repräsentanten aus mehreren einzelnen Merkmalsvektoren. Denkbar ist aber auch, dass Merkmalsvektoren vorhanden sind, die für sich allein schon Repräsentant für zum Beispiel ein Phonem sind.

Bei der phonembasierten Spracherkennung besteht das Problem, dass bei der Erstellung von Vokabularien deren Einzeleinträge paarweise möglichst unterschiedlich sein sollen, damit es später zu einer guten Erkennungsrate bei der Erkennung der zu erkennenden Begriffe kommt. Damit die Güte eines solchen Vokabulars beurteilt werden kann, ist es erforderlich, ein quantitatives Maß für den Abstand zweier Vokabulareinträge zu haben. Wird an Hand dieses Maßes festgestellt, dass die zugehörigen einzelnen Vokabulareinträge eine zu große Ähnlichkeit haben, kann der Ersteller des Vokabulars veranlasst werden, die Vokabulareinträge durch solche andere Vokabulareinträge zu ersetzen, dass deren Abstand in spracherkennungstechnischer Hinsicht größer ist.

Beispielsweise können einem Spracherkenner zunächst die Worte Mayer und Meier als zu einem Vokabular gehörend angeboten werden. In der phonetischen Umschrift sind die hier zugehörigen Merkmalsvektoren beziehungsweise die zugehörigen Repräsentanten schon offensichtlich so gering beabstandet, dass ein Spracherkenner hier Schwierigkeiten hat, sie auseinander zu halten. In einer solchen Situation ist es sinnvoll, den Ersteller des Vokabulars darauf hinzuweisen, dass hier eine nähere Unterscheidung getroffen werden soll. Dies kann beispielsweise in einem Dialog geschehen, in dem dem Ersteller beispielsweise die Möglichkeit gegeben wird, die Einträge hier noch mit den jeweils zugehörigen Vornamen zu verknüpfen.

Entsprechendes kann gesagt werden, wenn es sich bei den akustisch zu nah beieinander liegenden Vokabulareinträgen um Steueranweisungen wie zum Beispiel "accept" und "reject" handelt. In diesem Fall kann dem Ersteller des Vokabulars die Möglichkeit gegeben werden, im gleichen Kontext stehende andere Steueranweisungen zu installieren.

Eine gute Wahl bezüglich der Erkennerbegriffe führt letztlich zu einer Erhöhung der Erkennungsrate bei den später erfolgenden Erkennungsprozessen. Dies gilt allgemein, aber insbesondere dort, wo wegen Speichermangel nur kompakte Spracherkenner eingesetzt werden können. Mobile Kommunikationsendgeräte beispielsweise, die immer kleiner bzw. immer kompakter aber mit immer mehr Funktionen ausgestattet werden, haben in der Regel einen solchen Speichermangel. Außerdem wird deren Kompaktheit auch dadurch erreicht, dass das verarbeitbare Frequenzspektrum sehr begrenzt wird. Dadurch können beispielsweise Laute wie S und F oft nicht mehr als signifikant unterschiedlich von einem Spracherkenner erkannt werden.

Bei der sprecherabhängigen Spracherkennung können solche Unzulänglichkeiten wenigstens teilweise durch ein zusätzliches Benutzertraining ausgeglichen werden, obwohl es auch da wünschenswert ist, von Anfang an ein System zu haben, das gut funktioniert. Bei Anlagen aber, die sprecherunabhängig arbeiten und bei denen später durch den Benutzer keine Korrekturmöglichkeiten mehr möglich ist, ist es besonders wichtig, dass von Anfang an in der Anlage nur solche Vokabulareinträge integriert sind bzw. integriert werden, die nicht schon allein wegen ihrer zu großen Ähnlichkeit mit anderen Vokabulareinträgen zu Problemen führen.

Grundsätzlich ist es zwar möglich, das Wissen von Experten, die über spezielle phonetische Kenntnisse verfügen, heranzuziehen, um die phonetischen Transkriptionen gegeneinander zu bewerten. Dieses Vorgehen ist aber nicht automatisierbar und es erfordert für jede Sprache das entsprechende phonetische Wissen. Außerdem ist im Vorhinein nicht bekannt, in welcher konkreten Anlage bzw. in welchem konkreten Gerät ein Vokabular eingesetzt wird. Ein Vokabular kann funktionieren, weil es in einer Anlage bzw. in einem Gerät eingesetzt wird, dessen verarbeitbares Frequenzspektrum relativ groß und deshalb auch die Empfindlichkeit für eine Spracherkennung entsprechend hoch ist. Das gleiche Vokabular kann aber in einer an deren Anlage bzw. in einem andern Gerät möglicherweise auch nicht funktionieren, weil zum Beispiel deren verarbeitbares Frequenzspektrum und daher deren Empfindlichkeit für eine Spracherkennung zu sehr eingeschränkt ist. Letztlich kann nur durch die Anlage bzw. das Gerät selbst festgestellt werden, ob ein darin integriertes Vokabular gut funktioniert.

Eine einfache Möglichkeit, den Grad des Unterschieds zwischen Vokabulareinträgen zu ermitteln, besteht darin, eines der bereits bekannten Zeichenketten-Abstandsmaße, beispielsweise die sogenannte Levenshtein-Distanz, für die phonetische Transkription der Vokabulareinträge zu verwenden. Diese Art der Abstandsermittlung ist auch für große Wortschätze leicht automatisierbar.

Die Levenshtein-Distanz ist definiert als die minimale Anzahl an Zeichen, die ersetzt, eingefügt oder gelöscht werden müssen, um eine Zeichenkette 1 nach einer Zeichenkette 2 umzuformen. Levenshtein arbeitet damit auf der Ebene von Ziffern.

Wenn das Muster "MUNICH" in das Muster "MUNCHEN" transformiert wird, indem zuerst das I an der vierten Position gelöscht wird und dann am Ende die Zeichen E und N eingefügt werden, sind damit drei Aktionen durchgeführt worden. Wenn für Löschen, Ersetzen und Einfügen identische "Kosten" von "1" festgelegt werden, addieren sich die "Gesamtkosten" im vorliegenden Beispiel auf 3.

In der Regel bestehen die zu klassifizierenden Sequenzen aus wesentlich mehr Elementen und unterscheiden sich zu dem in ihrer Länge. Da die Bedeutung der "Kosten" aber von der Länge der Sequenzen abhängig ist, ist es nötig, diese "Kosten" zu standardisieren. Das kann dadurch geschehen, dass die zunächst ermittelten "Transformationskosten" durch die Länge der Sequenzen (bei unterschiedlicher Länge durch die Länge der längeren Sequenz) dividiert werden. Wir erhalten dann ein Maß für die Distanz zwischen zwei Sequenzen. Diese beträgt im oben dargestellten Beispiel zwischen "MUNICH" und "MUNCHEN" $3/7 \approx 0{,}43$. Die Distanz kann damit zwischen 0 (maximale Ähnlichkeit) und 1 (maximale Unähnlichkeit) variieren.

Zur Levenshtein-Distanz sind beispielsweise ZUMA-Nachrichten 40 des Zentrums für Umfragen, Methoden und Analysen in Mannheim, Jg. 21.Mai 1997, Seiten 52 bis 76, insbesondere Seiten 61 bis 76, mit dem Titel "Optimal-Matching-Technik: Ein Analyseverfahren zur Vergleichbarkeit und Ordnung individuell differenter Lebensverläufe" erschienen, in denen das oben Erwähnte angesprochen ist.

Aufgabe der vorliegenden Erfindung ist, ein Verfahren zum Ermitteln der Verwechslungsgefahr von Vokabulareinträgen bei der phonembasierten Spracherkennung anzugeben, das ohne Expertenwissen auskommt, automatisierbar ist und sich an die konkreten Eigenschaften der akustischen Hidden Markov Modelle eines für die Anwendung des Verfahrens verwendeten Spracherkenners anpasst.

Diese Aufgabe wird erfindungsgemäß durch ein Verfahren gelöst, das den im Anspruch 1 angegebenen Verfahrensschritt aufweist.

Danach wird die Verwechslungsgefahr von Vokabulareinträgen dadurch ermittelt, dass in einer jeweiligen summarischen Zusammenfassung die gegenseitigen Positionen betreffender Prototypen von jeweilig paarweise zu bewertenden Repräsentanten von Phonemen, Phonem-Segmenten bzw. Ganzwörtern untereinander innerhalb eines zu den Prototypen gehörenden akustischen Merkmalraums gewichtet werden.

Das Verfahren arbeitet auf der Ebene von Prototypen von zum Beispiel Phonemen und kommt ohne Expertenwissen aus, weil die Bewertung von Unterschieden zwischen Vokabulareinträgen durch diejenige Instanz festgelegt wird, die später die Erkennung durchführt. Dadurch ist auch die Qualität dieses Maßes auf die zugehörige Aufgabe angepasst. Schließlich ist das Verfahren automatisiert durchführbar. Es ist auch separat, das heißt gegebenenfalls auch nachträglich, auf ein bestehendes Vokabular anwendbar.

Vorteilhafte Ausgestaltungen der Erfindung sind Gegenstand von Unteransprüchen.

Danach wird die Gewichtung entsprechend einer vorgegebenen mathematischen Funktion durchgeführt, wodurch die Möglichkeit eröffnet ist, je nach Vorgabe der mathematischen Funktion die Güte des gesuchten Ergebnisses in entsprechender Weise zu beeinflussen.

In einer anderen vorteilhaften Ausgestaltung der Erfindung wird zumindest ein Hinweis auf den Erhalt eines kritischen Ergebnisses gegeben bzw. wird ein Dialogprozess gesteuert, um erkannte kritische Vokabulareinträge entweder näher zu spezifizieren oder durch für den konkret vorliegenden Spracherkenner günstigere Einträge zu ersetzen.

Nachfolgend wird ein Ausführungsbeispiel der Erfindung an Hand einer Zeichnung mit einer einzigen Figur näher erläutert. Dabei werden die oben gemachten Ausführung zu der besagten einzigen Figur an dieser Stelle zurückgerufen und den weiteren Ausführungen zu Grunde gelegt.

Ein mögliches Maß für den Abstand zweier Phoneme kann beispielsweise gemäß folgender mathematischer Beziehungen ermittelt werden:

$$(1)\ \mathrm{dist}\ (\ /a/,\ /e/\ ) = \Sigma_i\ <|a_{ij} - e_{ik}|>_{jk}$$

$$(2)\ \mathrm{dist}(\ \varepsilon,\ /x/\ ) = <\mathrm{dist}(\ /y/,\ /x/\ )>_{/y/\neq /x/}\ .$$

Dabei sind: /a/, /e/ und /x/ Beispiele für konkrete Phoneme; $\varepsilon$ eine als Phonem aufgefasste Lücke; /y/ ein beliebiges Phonem; dist der Hinweis auf eine Distanzfunktion; $a_{ij}$ und $e_{ik}$ Prototypen j bzw. k der betreffenden Phoneme hier /a/ und /e/ im Zustand i; j und k Laufvariablen im Bereich 1, 2, 3, ..., j bzw. k für die Aufzählung der Prototypen der betreffenden Phoneme.

Gemäß (1) werden alle Prototypen $a_{ij}$ und $e_{ik}$ für alle Zustände i der Phoneme /a/ und /e/ paarweise verglichen. Das sind z.B. jeweils immer genau 3 Zustände (wie in der Figur gezeigt). Die Laufindizes j und k zählen die Prototypen für die Phoneme /a/ und /e/ im Zustand i. Deshalb geht die Summe auch über die Zustände i.

Veranschaulicht bedeutet (1): Es werden zwei Phoneme /a/ und /e/ verglichen, indem zunächst einmal die 3 Zustände i verglichen werden.

Ein Zustand i der Phoneme /a/ und /e/ wird verglichen, indem der mittlere Abstand der Prototypen $a_{ij}$ und $e_{ik}$ bestimmt wird. Der mittlere Abstand wird im vorliegenden Fall für den Zustand i=1 aus 12 Abständen, für den Zustand i=2 aus 6 und für den Zustand i=3 aus insgesamt 9 Abständen ermittelt.

Die spitzen Klammern deuten einen "Erwartungswert" für die paarweisen Abstände an, weswegen als Laufindizes j und k angegeben sind.

Die Werte für j und k können unterschiedlich sein, wie in der Figur zu erkennen ist. Beispielsweise ist für den Zustand 1 j=3 und k=4.

Die Prototypen $a_{ij}$ und $e_{ik}$ können auch als Vektoren im Merkmalsraum aufgefasst werden. Dabei spielt der Grad der Dimensionen keine Rolle. Ebenso spielt die Anzahl der Zustände keine Rolle. Die zu berücksichtigende Anzahl von Zuständen muss lediglich zwischen den Phonemen gleich sein.

Die "Kosten" für Einfügungen und Löschungen können z. B. aus den Übergangswahrscheinlichkeiten ermittelt werden. Im vorliegenden Ausführungsbeispiel soll dafür jedoch der mittlere Abstand zu allen Phonemen als Maß dienen. Für die "Kosten" einer Lücke $\varepsilon$ anstatt des Phonems /x/ ergibt sich in diesem Fall gemäß der Funktionsvorschrift (2) und ist der Erwartungswert für den Abstand von /x/ zu einem beliebigen Phonem. Dabei kann auch die Modellierung von Wortpausen durch sogenannte "silence states" /si/ Verwendung finden.

Die Funktionen in (1) und (2) ermöglichen nach dem Levenshtein-Algorithmus für zwei Phonemfolgen durch dynamische Programmierung den Abstand zu bestimmen.

Das Verfahren muss sich nicht notwendigerweise auf die Phoneme als konstituierende Einheiten beziehen. Es ist möglich, statt eines bestimmten Phoneminventars, direkt die Zustände im Hidden Markov Modell oder bei Erkennern mit Ganzwortmodellen die einzelnen Segmente der Wortmodelle zu verwenden.

Gemeinhin existieren für kommerzielle Spracherkennungssysteme spezielle Editoren für Vokabulare. Hier kann der Benutzer diejenigen Worte vorgeben, die die Spracherkennung in einem speziellen Systemzustand erkennen soll. Daraufhin werden automatisch die phonetischen Umschriften erzeugt und die Phonemstrings dem Vokabular hinzugefügt.

Mit dem erfindungsgemäßen Verfahren ist es möglich, den Benutzer konkret auf Einträge im Vokabular hinzuweisen, deren Unterscheidung durch den betreffenden Erkenner mit der vorliegenden Qualität der akustischen Modellierung der Phoneme im Hidden Markov Modell schwierig ist. Der Benutzer kann dann beispielsweise andere Begriffe verwenden.

Weiterhin ist es möglich, mit geeigneten Methoden auch eine einzige Maßzahl für ein gesamtes Vokabular zu ermitteln, die die Qualität des gesamten Vokabulars in Bezug auf die Unterscheidbarkeit der Einträge innerhalb des Vokabulars bewertet.

Erfolgt in Dialogsystemen, wie z. B. bei Systemen zur Implementierung von VoiceXML oder bei manchen Auto-Attendant-Systemen, der Aufbau der Vokabularien automatisch, ist die eben geschilderte Methode, nach der während des Aufbaus eines Vokabulars durch einen Ersteller der Ersteller sofort darauf hingewiesen wird, einen Vokabulareintrag eventuell zu ändern, wegen des hier jetzt nicht konkret vorhandenen Erstellers versperrt. Die Erfindung kann aber dennoch eingesetzt werden, wenn dem Spracherkenner a priori bekannt gemacht ist, welche Vokabulareinträge leicht zu verwechseln sind. Der Spracherkenner kann dann beim Erkennen eines derartigen Wortes einen Klärungsdialog starten, in dem nur noch die zugehörigen, leicht verwechselbaren Einträge des Vokabulars aktiv sind und in dem dem aktuellen Benutzer des Sprachdialogsystems eine Entscheidungsmöglichkeit angeboten wird, sich zwischen den in Frage stehenden Einträgen zu entscheiden.

**Patentansprüche**

1. Verfahren zum Ermitteln der Verwechslungsgefahr von Vokabulareinträgen bei der phonembasierten Spracherkennung, **dadurch gekennzeichnet, dass** in einer jeweiligen summarischen Zusammenfassung die gegenseitigen Positionen untereinander jeweilig betreffender Prototypen von jeweilig paarweise zu bewertenden Repräsentanten von Phonemen, Phonem-Segmenten bzw. Ganzwörtern innerhalb eines zu den Prototypen gehörenden akustischen Merkmalraums gewichtet werden.

2. Verfahren nach Anspruch 1, dadurch gekennzeichnet, dass die Gewichtung entsprechend einer vorgegebenen mathematischen Funktion durchgeführt wird.

3. Verfahren nach Anspruch 2, dadurch gekennzeichnet, dass als mögliche Art von mathematischen Funktionen Funktionen der Form

$$(1) \quad dist\,(\,/a/,\,/e/\,) = \textstyle\sum_i <|a_{ij} - e_{ik}|>_{jk} \text{ bzw.}$$

$$(2) \quad dist\,(\,\varepsilon,\,/x/\,) = <dist\,(\,/y/,\,/x/\,)>_{\,/y/\neq/x/}$$

verwendet werden, wobei /a/, /e/ und /x/ Beispiele für konkrete Phoneme sind, $\varepsilon$ eine als Phonem aufgefasste Lücke ist, /y/ ein beliebiges Phonem ist, dist der Hinweis auf eine Distanzfunktion ist, $a_{ij}$ und $e_{ik}$ Prototypen j bzw. k der betreffenden Phoneme hier /a/ und /e/ im Zustand i sind und j und k Laufvariablen im Bereich 1, 2, 3, ..., j bzw. k für die Aufzählung der Prototypen der betreffenden Phoneme sind.

4. Verfahren nach einem der vorherigen Ansprüche, **dadurch gekennzeichnet, dass** bei einem als zu gering empfundenen Ergebnis nach einer Gewichtung entweder ein Dialogprozess durchgeführt wird, an dessen Ende eine weiter gehende Spezifizierung oder gänzliche Neufassung betreffender Repräsentanten bzw. betreffender hinter den Repräsentanten stehender Vokabulareinträge steht, oder wenigstens ein Hinweis auf das Vorliegen der gegebenen Situation vermittelt wird.

Phonem /a/:

$a_1$  $a_2$  $a_3$

$a_{11}$  $a_{12}$  $a_{13}$  $a_{21}$  $a_{22}$  $a_{31}$  $a_{32}$  $a_{33}$

Phonem /e/:

$e_1$  $e_2$  $e_3$

$e_{11}$  $e_{12}$  $e_{13}$  $e_{14}$  $e_{21}$  $e_{22}$  $e_{23}$  $e_{31}$  $e_{32}$  $e_{33}$

EP 1 457 966 A1

EP 1 457 966 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 073 099 A (FABIANI MARC ET AL) 6. Juni 2000 (2000-06-06) * Spalte 3, Zeile 46 - Zeile 64 * * Spalte 10, Zeile 64 - Spalte 11, Zeile 29 * * Spalte 9, Zeile 54 - Spalte 10, Zeile 46 * ----- | 1-4 | G10L15/10 G10L15/06 |
| A | EP 0 700 031 A (AT & T CORP) 6. März 1996 (1996-03-06) ----- | 1-4 | |
| A | US 6 134 527 A (ALBRECHT STEVEN ET AL) 17. Oktober 2000 (2000-10-17) ----- | 1-4 | |
| A | EP 1 079 370 A (CANON KK) 28. Februar 2001 (2001-02-28) ----- | 1-4 | |

RECHERCHIERTE SACHGEBIETE (Int.Cl.7)

G10L

Der vorliegende Recherchenbericht wurde für alle Patentansprüche erstellt

| Recherchenort | Abschlußdatum der Recherche | Prüfer |
|---|---|---|
| Den Haag | 16. Juni 2004 | Burchett, S |

EP 1 457 966 A1

## ANHANG ZUM EUROPÄISCHEN RECHERCHENBERICHT
## ÜBER DIE EUROPÄISCHE PATENTANMELDUNG NR.

EP 04 10 0690

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6073099 | A | 06-06-2000 | KEINE | | |
| EP 0700031 | A | 06-03-1996 | US | 5737723 A | 07-04-1998 |
| | | | EP | 0700031 A1 | 06-03-1996 |
| | | | JP | 8076788 A | 22-03-1996 |
| US 6134527 | A | 17-10-2000 | KEINE | | |
| EP 1079370 | A | 28-02-2001 | EP | 1079370 A2 | 28-02-2001 |
| | | | JP | 2001147696 A | 29-05-2001 |

EPO FORM P0461

Für nähere Einzelheiten zu diesem Anhang : siehe Amtsblatt des Europäischen Patentamts, Nr.12/82

9